# EUROPÄISCHE PATENTANMELDUNG

(11) **EP 4 803 234 A1**
(43) Veröffentlichungstag der Anmeldung: **09.09.2026**
(21) Anmeldenummer: 26157660.7
(22) Anmeldetag: 10.02.2026
(51) Int. Cl.: B23H 11/00, B23H 7/02

(54) **VORRICHTUNG ZUM ELEKTROEROSIVEN ABRICHTEN VON SCHLEIFSCHEIBEN SOWIE SCHLEIFMASCHINE**

(30) Priorität: 14.02.2025 DE 102025105547
(71) Anmelder: Fritz Studer AG, 3612 Steffisburg (CH)
(72) Erfinder: Vorwerk-Handing, Lennard Markus, 3600 Thun (CH); Klotz, Helmut Michael, 3612 Steffisburg (CH); Binggeli, Adrian, 3322 Mattstetten (CH)
(74) Vertreter: Witte, Weller & Partner Patentanwälte mbB

(57) **Zusammenfassung**

Eine Vorrichtung (70) dient zum elektroerosiven Abrichten von Schleifscheiben (44, 46). Die Vorrichtung (70) weist eine Schleifspindel (40, 42) mit einer um eine Spindelachse (54) rotierbaren Schleifscheibenaufnahme (50) zur Aufnahme einer elektroerosiv abrichtbaren Schleifscheibe (44, 46), einen als Drahtelektrode entlang einer Drahtführung (76) geführten Abrichtdraht (78), und eine Stromzuführung (80) zur Einleitung hochfrequenter Spannungsimpulse in den Abrichtdraht (78) und die Schleifscheibe (44, 46) auf. Die Stromzuführung (80) umfasst einen Strompfad (86) in die Schleifspindel (40, 42) zur elektrischen Kontaktierung der Schleifscheibe (44, 46). Der Strompfad (86) umfasst einen koaxial zur Schleifspindel (40, 42) orientierten Kontaktfinger (140), der zur Kontaktierung der Schleifscheibe (44, 46) eine Stirn (132) der Schleifspindel (40, 42) in einem zentralen Kontaktbereich (146) kontaktiert, den die Spindelachse (54) schneidet. Eine Schleifmaschine (10) nutzt eine solche Vorrichtung (70) zum elektroerosiven Abrichten von Schleifscheiben (44, 46).

## Beschreibung

Die vorliegende Offenbarung bezieht sich auf eine Vorrichtung zum elektroerosiven Abrichten von Schleifscheiben sowie auf eine Schleifmaschine, insbesondere Rundschleifmaschine, die mit einer solchen Abrichtvorrichtung versehen ist. Allgemein bezieht sich die vorliegende Offenbarung auf das Abrichten von Schleifscheiben mittels Drahterodieren.

Aus der DE 10 2015 121 316 A1 ist eine Schleifscheibe zur Bearbeitung eines Werkstücks bekannt, mit einem um eine Drehachse rotierbaren Grundkörper, einer elektrisch leitfähigen Werkzeugfläche zum Materialabtrag am Werkstück, und einer Funktionsfläche, die mit der Werkzeugfläche elektrisch verbunden ist, zur elektrischen Kontaktierung der Werkzeugfläche während einer Drehung des Werkzeugs, wobei die Funktionsfläche bezüglich der Drehachse axial auf einer Stirnseite oder radial auf einem Absatz des Grundkörpers angeordnet ist.

Aus der EP 2 607 006 A1 ist eine Vorrichtung zum Abrichten von Schleifscheiben mittels Drahterodieren bekannt. Aus der DE 10 2015 104 405 A1 ist eine Drahtführung zur Führung einer Drahtelektrode beim Drahterodieren bekannt. Aus der DE 10 2023 118 650 A1 ist eine für das elektroerosive Abrichten geeignete Schleifscheibe bekannt.

Die JP H05-26255 U offenbart eine Schleifscheibenvorrichtung mit einer leitfähigen Schleifscheibe, die für das elektrolytische oder funkenerosive Abrichten mittels einer Abricht-Elektrode ausgelegt ist. Weitere Ansätze zum Abrichten von Schleifscheiben sind aus der CN 1562566 A , JP H07-164286 A , JP H05-277937 A und der JP 2001-334462 A bekannt.

Bei der Schleifbearbeitung wird mittels Abrichten ein genauer Rundlauf und eine korrekte geometrische Form der Schleifscheibe sichergestellt. Zudem kann das Abrichten dazu genutzt werden, eine Schleifscheibe zu profilieren und/oder zu schärfen. Mit dem Abrichten können ferner Verunreinigungen der Schleifscheibe entfernt werden. Schließlich lassen sich mit dem Abrichten auch stumpf gewordene Schleifkörner/Schleifpartikel/Schneidstoffe aus dem Schleifkörper herauslösen, wodurch die Schleifscheibe geschärft wird.

Bei dem sogenannten drahterosiven Abrichten handelt es sich um ein elektroerosives Verfahren. Es geht jedoch nicht um die Bearbeitung von Werkstücken (vergleiche auch das sogenannte elektrochemische Schleifen). Stattdessen geht es um das Abrichten von Schleifscheiben, die dann wiederum zur konventionellen Schleifbearbeitung von Werkstücken nutzbar sind.

Das drahterosive Abrichten beruht auf dem Drahterodieren. Es ist üblicherweise eine Abrichtvorrichtung mit einem Abrichtdraht und einem Antrieb für den Abrichtdraht vorgesehen. Der Drahtantrieb zieht den Abrichtdraht beispielsweise von einer Spule ab und befördert ihn über Stromzuführungen und eine dünne Drahtführungsscheibe mit umlaufender Nut an der Schleifscheibe vorbei. Die Schleifscheibe rotiert dabei mit einer hohen Umfangsgeschwindigkeit. Die Erosionsstelle wird üblicherweise mit einem dielektrischen Spülmedium geflutet. Der jeweils zuvor genutzte Abschnitt des Abrichtdrahts wird üblicherweise zerkleinert und entsorgt.

Der Materialabtrag an der Schleifscheibe erfolgt üblicherweise berührungslos durch extrem kurze, schnell aufeinander folgende Gleichstrompulse, die in einem kleinen Spalt zwischen Elektrode (Abrichtdraht) und Schleifscheibe im Dielektrikum eine Entladung erzeugen. Während der Entladung werden winzige Bereiche eines leitfähigen Bindermaterials der Schleifscheibe geschmolzen und nach der Funkenentladung als kleine Fragmente aus dem Spalt gespült. Durch den Materialabtrag bildet sich ein kleiner Krater an der Oberfläche der Schleifscheibe. Durch stetige Wiederholung entsteht ein stetiger Abtrag an der Oberfläche der Schleifscheibe. Die Schleifpartikel bleiben in der Regel vom Erodierprozess unbeeinflusst in ihrer Gestalt erhalten.

Es gibt also üblicherweise einen Entladungsspalt und somit keine mechanische Berührung zwischen dem Abrichtdraht und dem Schleifkorn bzw. dem Binder im Schleifbelag der Schleifscheibe. Wenn die Schleifpartikel von der Bindung freigelegt sind, können sie ohne wesentliche Krafteinwirkung gelöst werden oder gar herausfallen.

Es hat sich gezeigt, dass mit dem drahterosiven Abrichten verschiedene Vorteile erzielt werden können. Dies bezieht sich beispielsweise auf die Möglichkeit zum Abrichten von Schleifscheiben mit besonders harten Schleifmitteln (beispielsweise Diamant basierte oder Bornitrit basierte Schleifmittel). Die Bindung der Schleifkörner im Schleifbelag erfordert als Voraussetzung für das drahterosive Abrichten ein leitfähiges Bindermaterial. Abgesehen vom Verschleiß des Abrichtdrahts hält sich der Verschleiß bei der Abrichtvorrichtung in Grenzen. Mit einer Abrichtvorrichtung können unterschiedliche Profile erzeugt und abgerichtet werden. Die Abrichtvorrichtung kann in die Schleifmaschine integriert werden. Auch externe Abrichtvorrichtungen sind vorstellbar.

Das drahterosive Abrichten eignet sich beispielsweise für Schleifscheiben für das Außenschleifen/Außenrundschleifen sowie für das Innenschleifen/Innenrundschleifen. Mittels drahterosivem Abrichten abrichtbare Schleifscheiben können besonders harte Schleifmittel/Schneidstoffe aufweisen. Hierdurch eignen sich die Schleifscheiben beispielsweise zur Hartbearbeitung. Dies kann beispielhaft Werkstücke aus gehärtetem Stahl, Hartmetall, keramischen Werkstoffen und Ähnliches umfassen.

Es hat sich jedoch auch gezeigt, dass die Stromübertragung in die (rotierende) Schleifscheibe insbesondere für schnelldrehende Schleifscheiben Herausforderungen mit sich bringt. Etablierte Lösungen nutzen Bürstenkontakte/Schleifkontakte oder dergleichen, vergleiche hierzu die in der DE 10 2015 121 316 A1 beschriebenen Ansätze zur axialen oder umfänglichen (radialen) Kontaktierung der Schleifscheibe in einem außermittigen Bereich.

Es sind Schleifspindeln und hierfür geeignete Schleifscheiben bekannt, die für Drehzahlen im Bereich von über 20.000 min⁻¹, über 40.000 min⁻¹, über 60.000 min⁻¹ oder sogar über 90.000 min⁻¹ geeignet sind. Eine denkbare Anwendung ist das Innenrundschleifen mit Innenschleifscheiben. Solche Schleifscheiben weisen einen vergleichsweise kleinen Durchmesser auf, die hohen Drehzahlen gewährleisten trotzdem hohe Umfangsgeschwindigkeiten und eine hohe Abtragsleistung. Auch beim Abrichten sind hohe Drehzahlen erforderlich.

Die Schleifscheibe würde sich entsprechend mit sehr hoher Relativgeschwindigkeit gegenüber dem drehfest platzierten Kontakt bewegen. Dies kann zu einem übermäßig hohen Wärmeeintrag führen, der die Funktion und Haltbarkeit der Kontaktierung für das elektroerosiven Abrichten der Schleifscheibe beeinträchtigt. Die kann zu Qualitätseinbußen und verringerter Genauigkeit bei der Schleifbearbeitung führen.

Vor diesem Hintergrund liegt der Offenbarung die Aufgabe zugrunde, eine Vorrichtung zum elektroerosiven Abrichten von Schleifscheiben anzugeben, die sich für schnelldrehende Schleifscheiben eignet, beispielsweise für Innenschleifscheiben und dergleichen. Die Vorrichtung soll eine sichere Stromübertragung in die Schleifscheibe gewährleisten, damit der Abrichtvorgang prozesssicher und hochgenau vonstattengehen kann. Dabei soll eine dauerhafte und verschleißarme Kontaktierung der Schleifscheibe ermöglicht werden. Die Vorrichtung soll sich für die Integration in eine Schleifmaschine eignen, damit die Bearbeitung mit der Schleifscheibe und das Abrichten der Schleifscheibe möglichst in einer Aufspannung (der Schleifscheibe) durchgeführt werden können.

Gemäß einem ersten Aspekt bezieht sich die vorliegende Offenbarung auf eine Vorrichtung zum elektroerosiven Abrichten von Schleifscheiben, insbesondere Schleifscheibenabrichtvorrichtung, die Folgendes aufweist:
- eine Schleifspindel mit einer um eine Spindelachse rotierbaren Schleifscheibenaufnahme zur Aufnahme einer elektroerosiv abrichtbaren Schleifscheibe,
- einen als Drahtelektrode entlang einer Drahtführung geführten Abrichtdraht, und
- eine Stromzuführung zur Einleitung hochfrequenter Spannungsimpulse in den Abrichtdraht und die Schleifscheibe,
   wobei die Stromzuführung einen Strompfad in die Schleifspindel zur elektrischen Kontaktierung der Schleifscheibe umfasst, und
   wobei der Strompfad einen koaxial zur Schleifspindel orientierten Kontaktfinger umfasst, der zur Kontaktierung der Schleifscheibe eine Stirn der Schleifspindel in einem zentralen Kontaktbereich kontaktiert, den die Spindelachse schneidet.

Die Aufgabe der Offenbarung wird auf diese Weise gelöst. Offenbarungsgemäß erfolgt nämlich die Kontaktierung der Schleifscheibe - mittelbar oder unmittelbar - über einen Kontakt im Zentrum der Schleifspindel. Dort treten nur geringe Relativgeschwindigkeiten zwischen der Schleifspindel und dem Kontaktfinger bei der Rotation der Schleifspindel auf. Das rotierende Teil der Schleifspindel kann auch als Spindelwelle bezeichnet werden.

Der Kontaktfinger kann die Spindelwelle an einem ihrer beiden Enden im Zentrum kontaktieren. Dies kann das spindelnahe Ende oder das spindelferne Ende der Spindelwelle betreffen. Der Kontaktfinger ist keine Kontaktbürste, dies gilt zumindest für beispielhafte Ausgestaltungen.

Die Spindelachse schneidet den Kontaktbereich im Zentrum (Drehzentrum) der Schleifspindel. Der Kontaktbereich ist im Rahmen der vorliegenden Offenbarung der Bereich, in dem der Kontakt stattfindet. Der Kontaktbereich kann daher als Kontaktfläche zwischen der Stirn der Schleifspindel und dem Kontaktfinger betrachtet werden. Der Kontaktbereich ist üblicherweise ein Punkt oder eine Kreisfläche mit vergleichsweise kleinem Durchmesser. Je größer der Kontaktbereich (die Fläche des Kontakts) ist, desto geringer ist der Kontaktwiderstand. Je kleiner der Kontaktbereich (die Fläche des Kontakts) ist, desto kleiner sind auftretende Relativgeschwindigkeiten bei der Relativrotation zwischen der Schleifspindel und dem Kontaktfinger. Daher eignet sich diese Anordnung für Innenschleifscheiben und andere Schleifscheiben, die für die Bearbeitung mit sehr hohen Drehzahlen ausgelegt und auf entsprechenden Schleifspindeln sitzen. Dies kann Drehzahlen im Bereich von über 20.000 min⁻¹, über 40.000 min⁻¹, über 60.000 min⁻¹ oder gar über 90.000 min⁻¹ umfassen.

Die Stirn ist ein rotierender Teil der Schleifspindel, beispielsweise eine axiale Endfläche. Beispielhaft umfasst die Stirn eine geschlossene Kreisfläche. Dies ist nicht einschränkend zu verstehen. Gleichermaßen weist der Kontaktfinger eine der Stirn zugewandte Endfläche (Stirn des Kontaktfingers) auf. Die Endfläche des Kontaktfingers ist koaxial zur Stirn der Schleifspindel orientiert.

Die Stirn und der Kontaktfinger bilden gemeinsam eine "Drehdurchführung" für die Übertragung von Strom in die rotierende Schleifspindel. Die Stromübertragung in die rotierende Schleifscheibe erfolgt mittelbar über die Schleifspindel (bzw. eine Spindelwelle) davon, zumindest bei beispielhaften Ausgestaltungen. Die Schleifscheibe wird bei diesen Ausgestaltungen also nicht direkt mit dem Kontaktfinger kontaktiert. Es ist grundsätzlich auch vorstellbar, dass die Schleifscheibe in ihrem Zentrum kontaktiert wird. Mit anderen Worten kann die zu kontaktierende Stirn also auch an dem Ende der Schleifspindel kontaktiert werden, an dem die Schleifscheibe aufgenommen ist. Eine axiale und zentrale Kontaktierung kann auch bei einem Dorn der Schleifscheibe erfolgen, der wiederum an der Schleifspindel befestigt ist.

Eine offenbarungsgemäße Vorrichtung kann generell auch als Draht-Elektroerodier-Abrichtvorrichtung und als Schleifscheibenabrichtvorrichtung bezeichnet werden. Wesentlich ist, dass die elektroerosive Bearbeitung nicht zur Bearbeitung des eigentlichen Werkstücks (der konventionellen Schleifbearbeitung) genutzt wird, sondern zum Abrichten des Werkzeugs (also der Schleifscheibe). Die Schleifscheibe dient also als Werkzeug für die Schleifbearbeitung und gleichermaßen als Werkstück für das elektroerosive Abrichten.

Die Schleifscheibenaufnahme kann verschiedenartig gestaltet sein. Beispielhaft umfasst die Schleifscheibenaufnahme einen Dorn, auf den eine Schleifscheibe aufgesetzt werden kann. Die Schleifscheibenaufnahme kann auch eine (gegebenenfalls konische) Ausnehmung umfassen, in die eine Schleifscheibe eingesteckt wird. Andere Befestigungsarten der Schleifscheibe an der Schleifscheibenaufnahme sind denkbar. Die Schleifscheibenaufnahme kann ferner für eine Stromübertragung in die Schleifscheibe sorgen.

Die hierin beschriebenen Komponenten zur Kontaktierung der Schleifspindel und damit der Schleifscheibe können einer Stromübertragungseinheit zugeordnet sein. Die Stromübertragungseinheit umfasst demgemäß zumindest den Kontaktfinger und die Stirn. Die Stromübertragungseinheit bildet einen funktionalen Bestandteil des Strompfades in die Schleifspindel. Als Material für den Kontaktfinger bietet sich Graphit an. Andere Werkstoffe sind denkbar.

Gemäß einer beispielhaften Ausgestaltung weist der Kontaktfinger eine ballig geformte Endfläche auf, die der Stirn der Schleifspindel zugewandt ist. Mit anderen Worten ist die Endfläche des Kontaktfingers in diesem Ausführungsbeispiel konvex geformt. Auf diese Weise kann die Kontaktfläche im Kontaktbereich minimiert werden. Dies reduziert die Reibung zwischen der Stirn und dem Kontaktfinger.

Der Kontaktfinger kann auch eine plane Stirnfläche aufweisen, mit der die Stirn der Schleifspindel kontaktiert wird, die im Kontaktbereich ebenso plan ist. Ebenso ist eine Paarung aus ballig geformter Stirn und planer Stirnfläche des Kontaktfingers vorstellbar.

Gemäß einer weiteren beispielhaften Ausgestaltung ist der Kontaktfinger drehfest und axial verschieblich gelagert, wobei die Schleifspindel eine durch einen Drehantrieb rotierbare Spindelwelle aufweist. Beispielsweise ist der Kontaktfinger mittelbar oder unmittelbar an einem Halter gelagert. Der Kontaktfinger dreht sich üblicherweise nicht, wenn die Spindel (Spindelwelle mit Stirn) rotiert. Dies vereinfacht die Kontaktierung des Kontaktfingers selbst, der ja wiederum Bestandteil des Strompfades zur (mittelbaren) Kontaktierung der Schleifscheibe über die Schleifspindel ist. Die axiale Verschiebung des Kontaktfingers erfolgt insbesondere entlang der Spindelachse.

Die Schleifscheibe wird hingegen durch einen Drehantrieb der Schleifspindel rotiert. Die Schleifspindel (zumindest deren Spindelwelle) und die daran befestigte Schleifscheibe rotieren während des Abrichtvorgangs.

Gemäß einer weiteren beispielhaften Ausgestaltung weist die Vorrichtung ferner eine Andrückeinheit auf, die dazu ausgebildet ist, den Kontaktfinger definiert gegen die Stirn der Schleifspindel zu drücken. Dies umfasst insbesondere eine axiale Bewegung des Kontaktfingers entlang der Spindelachse.

Auf diese Weise kann der Kontaktfinger gezielt in zumindest zwei Zuständen betrieben werden. In einem Kontaktzustand drückt die Andrückeinheit den Kontaktfinger gegen die Stirn, sodass eine Stromübertragung für das elektroerosive Abrichten ermöglicht ist. In einem Nicht-Kontaktzustand gibt es keinen Kontakt zwischen der Stirn der Schleifspindel und dem Kontaktfinger. Es ist keine Stromübertragung möglich. In dem Nicht-Kontaktzustand kann die Schleifspindel mit der Schleifscheibe für Schleifbearbeitung genutzt werden. Wenn kein Kontakt zwischen dem Kontaktfinger und der Stirn der Schleifspindel besteht, gibt es im Nicht-Kontaktzustand auch keinen Verschleiß im Kontaktbereich.

Die Andrückeinheit kann dazu genutzt werden, eine definierte Andrücckraft bereitzustellen. Die Andrückkraft ist diejenige Kraft, mit der die Andrückeinheit den Kontaktfinger gegen die Stirn der Schleifspindel drückt. Auf diese Weise kann der Kontakt zwischen dem Kontaktfinger und der Stirn günstig beeinflusst werden, um die Stromübertragung zu gewährleisten und den Verschleiß zu minimieren. Wenn die Anlage des Kontaktfingers an der Stirn kraftgesteuert erfolgt, kann unabhängig von einem Verschleiß/Verbrauch des Kontaktfingers ein günstiger Kontakt zur Stromübertragung gewährleistet werden.

Gemäß einer weiteren beispielhaften Ausgestaltung umfasst die Andrückeinheit einen pneumatischen Zylinder, der auf den Kontaktfinger einwirkt. Beispielsweise umfasst der pneumatische Zylinder eine Stange (oder Kolbenstange), die mechanisch mit dem Kontaktfinger gekoppelt ist. Demgemäß kann der Kontaktfinger durch eine Bewegung der Stange beim Einfahren und Ausfahren des Zylinders bewegt werden. Auf diese Weise kann der Kontaktfinger gezielt an die Stirn herangefahren und von der Stirn abgehoben werden.

Gemäß einer weiteren beispielhaften Ausgestaltung ist der Kontaktfinger austauschbar an einem Kontaktträger aufgenommen. Der Kontaktträger stellt einen Sitz für den Kontaktfinger bereit. Auf diese Weise kann der Kontaktfinger als Verschleißteil gestaltet sein und mit geringem Aufwand ausgewechselt werden. Am Kontaktträger selbst findet wiederum kein übermäßiger Verschleiß statt. Über den Kontaktträger kann Strom in den Kontaktfinger geleitet werden. Der Kontaktträger kann mechanisch mit der Andrückeinheit gekoppelt werden, beispielsweise mit einer Stange des Zylinders. Die Andrückeinheit kann den Kontaktträger axial bewegen, um auf diese Weise mittelbar den Kontaktfinger zu bewegen.

Gemäß einer weiteren beispielhaften Ausgestaltung weist die Vorrichtung ferner eine Verschleißüberwachung für den Kontaktfinger auf, die insbesondere eine axiale Position des Kontaktfingers überwacht. Die Verschleißüberwachung umfasst beispielsweise einen Verschleißsensor, der als Wegsensor gestaltet ist. Der Verschleißsensor ist beispielhaft ein Sensor, der die axiale Bewegung des Kontaktträgers überwacht. Beispielhaft ist zu diesem Zweck am Kontaktträger ein Indikator vorgesehen, etwa ein Kragen oder Vorsprung am Außenumfang des Kontaktträgers. Auf diese Weise kann mittelbar die axiale Position des Kontaktfingers erfasst werden.

Wenn festgestellt wurde, dass der Kontaktfinger über ein vertretbares Maß hinaus verschlissen ist, kann der Kontaktfinger vom Kontaktträger gelöst und durch einen neuen Kontaktfinger ersetzt werden.

Gemäß einer weiteren beispielhaften Ausgestaltung umfasst die Verschleißüberwachung einen kapazitiven oder induktiven Sensor. Kapazitive Sensoren oder induktive Sensoren sind besonders robust und daher für einen Einsatz in einer Schleifmaschine geeignet. Kapazitive Sensoren oder induktive Sensoren können Positionen kontaktlos erfassen.

Gemäß einer weiteren beispielhaften Ausgestaltung weist die Vorrichtung ferner eine Kühlmittelversorgung, insbesondere eine Kühlschmiermittelversorgung, auf, wobei die Kühlmittelversorgung zumindest eine Austrittsdüse für Kühlmittel oder Kühlschmiermittel aufweist, die auf den Kontaktbereich gerichtet ist. Schleifmaschinen weisen üblicherweise ohnehin eine Kühlmittelversorgung auf, die bei der Bearbeitung für die Kühlung und Abführung von Abrieb/Spänen sorgt.

In ähnlicher Weise kann die Kühlmittelversorgung auch zur Kühlung des Kontaktbereichs herangezogen werden. Eine effiziente Kühlung des Kontaktbereichs reduziert den Verschleiß der Stirn und/oder des Kontaktfingers. Die Stromübertragung über den Kontaktfinger in die Schleifspindel ist robust gestaltet, sodass ein Kühlmitteleintrag die Funktion nicht beeinträchtigt. Ganz im Gegenteil, die Kühlmittelversorgung kann dasselbe Kühlmittel (Kühlschmiermittel, Schleiföl, Schleifmilch) nutzen, das auch für die Bearbeitung von Werkstücken mit der Schleifscheibe verwendet wird.

Auf diese Weise muss der Kontaktbereich nicht aufwendig (hermetisch) gegenüber dem Arbeitsraum der Schleifmaschine abgetrennt werden. Auch dies vereinfacht die Kühlung des Kontaktbereichs. Mit anderen Worten muss also der Kontaktbereich nicht hermetisch gekapselt sein. Es versteht sich, dass die bauliche Gestaltung im Umfeld des Kontaktbereichs gleichwohl das Eindringen von bei der eigentlichen Schleifbearbeitung entstehendem Abrieb, Spänen und dergleichen möglichst verhindert oder minimiert.

In einer beispielhaften Ausgestaltung wird die Andrückeinheit derart angesteuert, dass der Kontaktfinger mit einer Andrückkraft gegen die Stirn gedrückt wird, mit der unter Berücksichtigung des Kühlmitteleintrags ein sicherer Kontakt (ohne Aufschwimmen des Kontaktfingers) zwischen dem Kontaktfinger und der Stirn gegeben ist.

Die Andrückkraft sollte einerseits niedrig sein, damit die Reibkraft bei der Relativbewegung zwischen der Stirn und den Kontaktfinger niedrig ist. Andererseits sollte die Andrückkraft hoch genug sein, damit ein versehentliches Abheben ("Aufschwimmen") des Kontaktfingers von der Stirn aufgrund des Kühlmitteleintrags im Kontaktbereich zuverlässig vermieden wird.

Gemäß einer weiteren beispielhaften Ausgestaltung weist die Schleifspindel ein Kontaktstück auf, das gemeinsam mit der Spindelwelle rotiert und die Stirn ausbildet. Auf diese Weise kann das Gegenstück zum Kontaktfinger ähnlich wie der Kontaktfinger demontiert werden, falls übermäßiger Verschleiß vorliegt. Das Kontaktstück ist beispielsweise ähnlich einem Stopfen gestaltet, der ein axiales Ende einer Spindelwelle der Schleifspindel abschließt.

Gemäß einer weiteren beispielhaften Ausgestaltung ist die Stirn an einem von der Schleifscheibenaufnahme der Schleifspindel fernliegenden Ende der Schleifspindel angeordnet. Mit anderen Worten sitzen die Schleifscheibe und die zur Kontaktierung dienende Stirn gemäß dieser Ausgestaltung an voneinander abgewandten Enden der Schleifscheibe. Mit anderen Worten erstreckt sich der Strompfad entlang der Längserstreckung der Spindelwelle.

Gemäß einer weiteren beispielhaften Ausgestaltung umfasst die Schleifspindel eine Spindellagerung, die keramische Wälzkörper nutzt. Insbesondere ist die Spindellagerung derart gestaltet, dass die Schleifspindel gegenüber ihrem Sitz (Beispielweise im Spindelgehäuse) elektrisch isoliert ist. Auf diese Weise werden Kriechströme und Ähnliches vermieden, die die Stromübertragung beeinträchtigen würden.

Üblicherweise umfasst die Spindellagerung zwei oder mehr Wälzlager zur Aufnahme radialer Kräfte und (in Grenzen) axiale Kräfte. Keramische Wälzkörper können als Kugeln oder Rollen vorliegen.

Gemäß einer weiteren beispielhaften Ausgestaltung ist die Materialpaarung im Kontaktbereich zwischen der Stirn und dem Kontaktfinger so gewählt, dass der Kontaktfinger schneller verschleißt als die Stirn der Schleifspindel. Auf diese Weise dient der Kontaktfinger als Verschleißteil, der Kontaktfinger kann vergleichsweise einfach gewechselt werden. Dies vereinfacht die Wartung der Vorrichtung.

Das Verschleißverhalten kann beispielhaft über die Härte der Stirn und des Kontaktfingers im Kontaktbereich gesteuert werden.

Gemäß einer weiteren beispielhaften Ausgestaltung ist zumindest die Stirn der Schleifspindel oder der Kontaktfinger mit einer verschleißmindernden Beschichtung versehen. Auf diese Weise kann das gewünschte Verschleißverhalten und insbesondere eine Mindesthaltbarkeit gewährleistet werden.

Gemäß einer weiteren beispielhaften Ausgestaltung der Vorrichtung dient der Abrichtdraht als Anode und die Schleifscheibe als Kathode für das elektroerosive Abrichten. Die Anode ist mit dem positiven Pol der Spannungsquelle gekoppelt. Die Katode ist mit dem negativen Pol der Spannungsquelle gekoppelt.

Es versteht sich, dass die Schleifscheibe auch leitfähig gestaltet ist, um die Stromführung hin zum Dielektrikum (Wirkbereich) zwischen der Katode und der Anode zu gewährleisten. Dies erfolgt beispielsweise durch Bereitstellung einer leitfähigen Matrix, in die Schneidpartikel eingebettet sind.

Gemäß einer weiteren beispielhaften Ausgestaltung weist die Vorrichtung einen Generator auf, der dazu ausgebildet ist, Spannungsimpulse hoher Stromstärke im Bereich von 100-500 A und hoher Frequenz im Bereich von 20-60 kHz für das Abrichten zu erzeugen. Die Frequenz kann in beispielhaften Ausgestaltungen über 60 kHz bis hin zu 100 kHz betragen. Auf diese Weise können Entladevorgänge (Funken) zwischen der Schleifscheibe und dem Abrichtdraht erzeugt werden, die für den Materialabtrag beim Abrichten sorgen. Die Stromübertragung mit hoher Stromdichte und sehr hoher Frequenz stellt entsprechende Anforderungen an die Kontaktierung. Dem wird mit der offenbarungsgemäßen Gestaltung des Kontaktbereichs der Stromübertragungseinheit Rechnung getragen.

Gemäß einer weiteren beispielhaften Ausgestaltung ist die Schleifspindel eine Innenschleifspindel, wobei die Schleifscheibe eine Innenschleifscheibe ist. Die offenbarungsgemäße Vorrichtung ist insbesondere für derartige Anordnungen geeignet. Eine Innenschleifscheibe ist beispielsweise eine Schleifscheibe, deren Außendurchmesser weniger als 150 mm, weniger als 100 mm, weniger als 50 mm, weniger als 25 mm oder sogar weniger als 5 mm beträgt. Demgemäß können Außenschleifscheiben einen Außendurchmesser mehr als 200 mm, mehr als 300 mm oder gar mehr als 400 mm aufweisen.

Üblicherweise werden Innenschleifscheiben (kleineren Durchmessers) mit höherer Drehzahl als Außenschleifscheiben (größeren Durchmessers) betrieben. Ziel ist jeweils eine bestimmte Relativgeschwindigkeit (Schnittgeschwindigkeit) zwischen Werkstück und Schleifscheibe.

Gemäß einer weiteren beispielhaften Ausgestaltung weist die Schleifspindel einen Drehantrieb auf oder ist mit einem Drehantrieb gekoppelt, der dazu ausgestaltet ist, die Spindelwelle in einem Drehzahlbereich von 20.000-90.000 min⁻¹ anzutreiben. Auf diese Weise eignet sich die Schleifspindel für Innen(rund)schleifscheiben. Die Schleifspindel kann als sogenannte Motorspindel oder als Getriebespindel gestaltet sein. Bei einer Motorspindel treibt der Motor direkt (ohne Getriebe oder Riemen) die Spindel an. Der Motor ist koaxial zur Spindelachse angeordnet. Bei einer Getriebespindel ist zwischen dem Motor und der Spindel ein Getriebe zur Kraftübertragung und Drehzahlanpassung angeordnet.

Gemäß einem weiteren Aspekt bezieht sich die vorliegende Offenbarung auf eine Schleifmaschine, insbesondere eine Rundschleifmaschine, mit einer Vorrichtung gemäß zumindest einer der hierin beschriebenen Ausgestaltungen zum elektroerosiven Abrichten von Schleifscheiben in der Schleifmaschine, insbesondere zum elektroerosiven Abrichten von Innenschleifscheiben.

Wenn die Abrichtvorrichtung in die Schleifmaschine integriert ist, kann die Abrichtvorrichtung die Maschinenkinematik nutzen. Schleifscheiben können während der Bearbeitung periodisch abgerichtet werden. Die Bearbeitung und das Abrichten kann in ein und derselben Aufspannung der Schleifscheibe erfolgen.

Beispielsweise wird der Abrichtdraht entlang einer Drahtführung geführt, die nahe bei oder an einem Werkstückspindelstock angeordnet ist. Auf diese Weise kann die Kinematik der Schleifmaschine, die zur Erzeugung von Relativbewegungen zwischen der Schleifscheibe und zu bearbeitenden Werkstücken dient, ebenso zur Erzeugung von Relativbewegung zwischen der Schleifscheibe und dem als Elektrode dienenden Abrichtdraht genutzt werden.

Insbesondere handelt es sich bei der Schleifmaschine um eine Innenschleifmaschine oder Innenrundschleifmaschine, die mit entsprechenden Schleifspindeln für das Innenschleifen/Innenrundschleifen ausgerüstet ist.

Wenn die Abrichtvorrichtung in die Schleifmaschine integriert ist, kann die in die Maschine integrierte Kühlmittelversorgung auch zur Kühlung des Kontaktbereichs zwischen dem Kontaktfinger und der Stirn genutzt werden. Dies vereinfacht die Bereitstellung des Kühlmittels und dessen Aufbereitung, Entsorgung, etc.

Es ist grundsätzlich auch vorstellbar, die Abrichtvorrichtung als eigenständige Einheit (ohne bauliche Integration in eine Schleifmaschine) zu gestalten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine schematische Ansicht einer Ausgestaltung einer Schleifmaschine mit Abrichtvorrichtung, in Draufsicht;
- Fig. 2:: eine vergrößerte Teilansicht auf Basis von Fig. 2 zur Veranschaulichung der Abrichtvorrichtung;
- Fig. 3:: eine vereinfachte, schematische Darstellung einer Abrichtvorrichtung zur Veranschaulichung eines elektroerosiven Abrichtvorgangs mittels Drahterodieren;
- Fig. 4:: eine schematische Ansicht einer Stromübertragungseinrichtung für eine Schleifspindel für das elektroerosive Abrichten mit koaxialer Stromübertragung in die Schleifspindel; und
- Fig. 5:: eine auf Fig. 4 basierende vergrößerte Teilansicht zur Veranschaulichung eines Kontaktbereichs zwischen einem Kontaktfinger und einer Stirn der Schleifspindel.

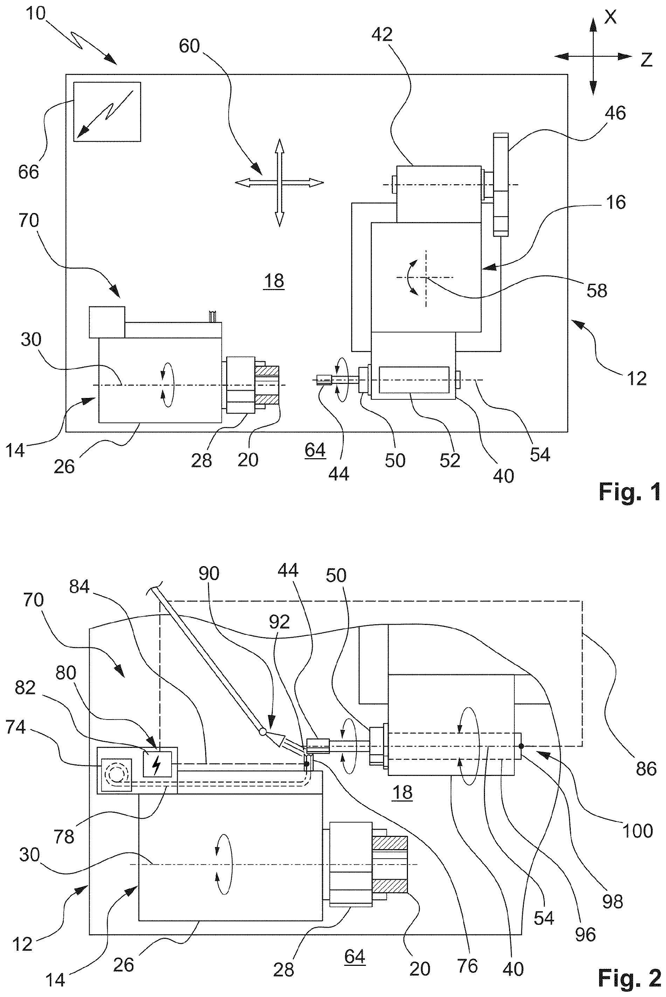

Fig. 1 veranschaulicht anhand einer schematischen Darstellung eine beispielhafte Ausgestaltung einer insgesamt mit 10 bezeichneten Schleifmaschine. Fig. 1 zeigt eine Draufsicht auf die Schleifmaschine 10. Es versteht sich, dass Schleifmaschinen auch von der Darstellung gemäß Fig. 1 abweichende Gestaltungen aufweisen können. Die Darstellung der Schleifmaschine 10 gemäß Fig. 1 ist exemplarischer Natur und daher nicht einschränkend zu verstehen. Die Schleifmaschine 10 ist hier als Rundschleifmaschine gestaltet und für das Innenrundschleifen, aber auch für das Außenrundschleifen geeignet. Es versteht sich, dass Rundschleifmaschinen bei entsprechenden Freiheitsgraden (Achsen) auch für das sogenannte Unrundschleifen nutzbar sind.

In Fig. 1 ist ein kartesisches Koordinatensystem X, Y, Z angedeutet, wobei lediglich die Achsen X und Z explizit gezeigt sind. Die X-Achse ist orthogonal zur Längsachse des Werkstücks bzw. der Werkstückspindel orientiert. Die Z-Achse ist horizontal orientiert und parallel zur Längsachse des Werkstücks bzw. der Werkstückspindel. Die Y-Achse ist in Fig. 1 senkrecht zur Ansichtsebene orientiert und beschreibt eine Höhenerstreckung senkrecht zur Z-Achse. Die X-Achse ist in Fig. 1 horizontal orientiert und beschreibt eine Tiefenerstreckung (Zustellrichtung). Rotationen um die X-Achse sind einer rotatorischen A-Achse zugeordnet. Rotationen um die Y-Achse sind einer rotatorischen B-Achse zugeordnet. Rotationen um die Z-Achse sind einer rotatorischen C-Achse zugeordnet. Das Koordinatensystem X, Y, Z dient insbesondere zur Veranschaulichung von Ausführungsbeispielen und Merkmalen und ist nicht einschränkend zu verstehen. Der Fachmann kann bei Bedarf erforderliche Transformationen ohne weiteres vornehmen.

Die Schleifmaschine 10 umfasst eine Basis 12, die auch als Maschinenbett oder Gestell bezeichnet werden kann. Die Basis 12 trägt einen Werkstückspindelstock 14 und einen Werkzeugspindelstock 16. Der Werkzeugspindelstock 16 kann auch als Schleifspindelstock bezeichnet werden. Der Werkzeugspindelstock 16 und der Werkstückspindelstock 14 können in einem Arbeitsraum 18 relativ zueinander bewegt werden, um Werkstücke 20 im Arbeitsraum 18 zu bearbeiten. Die Schleifmaschine 10 weisen üblicherweise eine den Arbeitsraum 18 und gegebenenfalls weitere Komponenten umschließende Einhausung auf, die in Fig. 1 nicht gezeigt ist.

Der Werkstückspindelstock 14 beherbergt eine Werkstückspindel 26 mit einem Werkstückhalter 28 zur Aufnahme von Werkstücken 20. Die Werkstückspindel 26 ist dazu ausgebildet, das im Werkstückhalter 28 aufgenommene Werkstück 20 um eine Achse 30 rotatorisch anzutreiben.

Der Werkzeugspindelstock 16 trägt im Ausführungsbeispiel zwei Schleifspindeln 40, 42, an denen jeweils eine Schleifscheibe 44, 46 aufgenommen ist. Die Schleifspindel 40 kann auch als Innenschleifspindel bezeichnet werden. Die Schleifscheibe 44 kann auch als Innenschleifscheibe zeichnet werden. Die Schleifspindel 42 kann auch als Außenschleifspindel bezeichnet werden. Die Schleifscheibe 46 kann auch als Außenschleifscheibe bezeichnet werden.

Die Schleifspindel 40 weist eine Schleifscheibenaufnahme 50 auf, an der die Schleifscheibe 44 gehalten ist. Auf diese Weise kann die Schleifscheibe 44 durch einen Drehantrieb 52 der Schleifspindel 40 um eine Spindelachse 54 rotatorisch angetrieben werden. Sowohl das Werkstück 20 als auch die Schleifscheibe 44 können bei der Schleifbearbeitung rotatorisch angetrieben werden.

Die als Innenschleifscheibe gestaltete Schleifscheibe 44 ist klein genug, um in eine Ausnehmung im Werkstück 20 einzufahren und dort eine Schleifoperation durchzuführen. Im Ausführungsbeispiel gemäß Fig. 1 weist der Werkzeugspindelstock 16 eine B-Achse 58 auf, um die der Werkzeugspindelstock 16 verschwenkbar ist. Die B-Achse 58 ist parallel zur Y-Achse. Auf diese Weise können die Schleifspindeln 40, 42 wechselseitig in eine Eingriffsposition in Bezug auf das Werkstück 20 gebracht werden. Ferner erlaubt die B-Achse 58 eine gezielte Schrägstellung der Schleifscheiben 44, 46 in Bezug auf das Werkstück 20. Mit anderen Worten sind Schleifoperation denkbar, bei denen die Spindelachse 54 gegenüber der Achse 30 der Werkstückspindel 26 geneigt ist.

Die Schleifmaschine 10 weist eine Maschinenkinematik 60 auf, die Komponenten zur Erzeugung der gewünschten Relativbewegung (vergleiche Zustellbewegung, Vorschub und dergleichen) zwischen der Schleifscheibe 44, 46 und dem Werkstück 20 umfasst. Üblicherweise sind Relativbewegungen zwischen dem Werkzeugspindelstock 16 und dem Werkstückspindelstock 14 entlang der X-Achse und entlang der Z-Achse ermöglicht. Die Maschinenkinematik 60 kann zur Bereitstellung der erforderlichen translatorischen Freiheitsgrade eine sogenannte Kreuzschlitten-Anordnung oder eine sogenannte T-Schlitten-Anordnung aufweisen. In beispielhaften Ausgestaltungen ist der Werkzeugspindelstock 16 entlang der X-Achse und der Z-Achse gesteuert verfahrbar.

In Fig. 1 ist ferner mit 64 eine Bedienerseite der Schleifmaschine 10 angedeutet. An der Bedienerseite 64 kann ein Bediener den Arbeitsraum 18 zur Überwachung der Bearbeitung des Werkstücks 20 und zum Einrichten der Schleifmaschine 10 gut einsehen.

In Fig. 1 ist ferner mit 66 eine Steuereinrichtung zur Steuerung der Schleifmaschine 10 bezeichnet. Die Steuereinrichtung 66 steuert die Maschinenkinematik 60, die Schleifspindeln 40, 42, den Werkstückspindelstock 14 und weitere Komponenten der Schleifmaschine 10. Die Steuereinrichtung 66 umfasst regelmäßig eine Bedienerschnittstelle (Bedienpanel), die in Fig. 1 nicht gezeigt ist.

Die Schleifmaschine 10 weist ferner eine Vorrichtung 70 auf, die zum Abrichten der Schleifscheiben 44, 46 mittels elektroerosiven Abrichten dient. Das Abrichten kann direkt im Arbeitsraum 18 erfolgen, mit anderen Worten können die Schleifscheiben 44, 46 an ihrer jeweiligen Schleifspindel 40, 42 eingespannt bleiben.

Fig. 2 zeigt anhand einer vergrößerten Teilansicht auf Basis von Fig. 1 eine beispielhafte Ausgestaltung der Vorrichtung 70. Die Vorrichtung 70 dient zum Abrichten mittels Drahterodieren. Zu diesem Zweck weist die Vorrichtung 70 eine Drahtzuführung 74 auf, über die ein Abrichtdraht 78 bereitgestellt wird. Der Abrichtdraht 78 wird entlang einer Drahtführung 76 geführt und in eine Nähebeziehung mit der abzurichtenden Schleifscheibe 44 gebracht. Im Ausführungsbeispiel gemäß Fig. 2 wird die Schleifspindel 40 mit der Schleifscheibe 44 durch die Maschinenkinematik 60 in Richtung auf die Vorrichtung 70 mit der Drahtführung 76 bewegt.

Aus Sicht eines Maschinenbedieners, der an der Bedienerseite 64 steht, ist die Vorrichtung 70, insbesondere die Drahtführung 76, im Ausführungsbeispiel hinter der Werkstückspindel 26 am Werkstückspindelstock 14 angeordnet. Die Vorrichtung 70 kann zumindest teilweise im Arbeitsraum 18 platziert sein. Andere Konfigurationen sind gleichwohl denkbar.

Die Vorrichtung 70 umfasst ferner eine Stromzuführung 80 mit einem Generator 82 zur Erzeugung hochfrequenter Spannungsimpulse hoher Stromstärke. Beim elektroerosiven Abrichten dienen der Abrichtdraht 78 und die Schleifscheibe 44 jeweils als Elektrode. Folglich muss entlang von Strompfaden 84 (in den Abrichtdraht 78) und 86 (in die Schleifscheibe 44) eine Stromübertragung erfolgen.

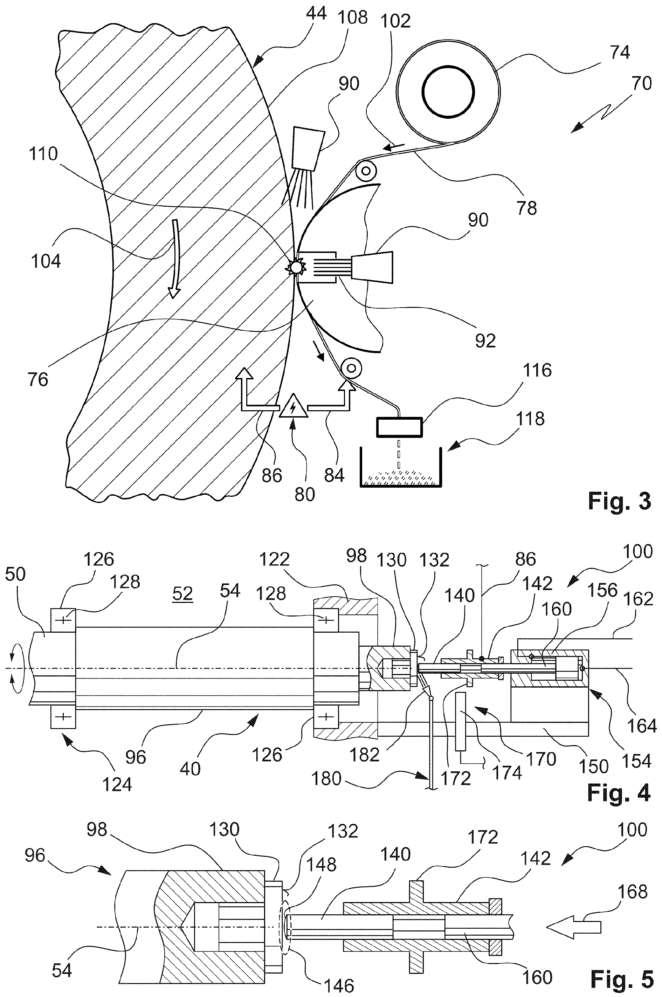

Der für das Abrichten erforderliche Abtrag an der Schleifscheibe 44 erfolgt in einem Wirkbereich (vergleiche Bezugszeichen 110 in Fig. 3), in dem die Schleifscheibe 44 und der Abrichtdraht 78 nahe beieinander (aber nicht einander kontaktierend) positioniert sind. Der Abtrag erfolgt in einem Dielektrikum im Wirkbereich 110. Das Dielektrikum wird durch ein dielektrisches Spülmedium 92 bereitgestellt, das über eine entsprechende Zuführung 90 herangeführt wird.

Die Schleifscheibe 44 rotiert während des elektroerosiven Abrichtens mit hoher Drehzahl. Trotzdem muss über den Strompfad 86 eine Stromübertragung in die Schleifscheibe 44 gewährleistet werden. Im Ausführungsbeispiel erfolgt die Stromübertragung in die Schleifscheibe 44 mittelbar über eine Spindelwelle 96 der Schleifspindel 40. Zu diesem Zweck wird ein Ende 98 der Spindelwelle 96 kontaktiert, das von der Schleifscheibenaufnahme 50 bzw. der Schleifscheibe 44 abgewandt ist.

Zur Kontaktierung der schnelldrehenden Spindel 40 dienen Komponenten, die eine Stromübertragungseinheit 100 bilden. Die Komponenten werden später in Zusammenhang mit Fig. 4 und Fig. 5 erläutert.

Fig. 3 veranschaulicht anhand einer schematisch stark vereinfachten Darstellung das Funktionsprinzip der Abrichtvorrichtung 70. In Fig. 3 ist lediglich ein Umfangsabschnitt der Schleifscheibe 44 geschnitten dargestellt, um ein Abrichten durch elektroerosiven Abtrag an einer Oberfläche 108 der Schleifscheibe 44 zu veranschaulichen. Die Abrichtvorrichtung 70 nutzt einen Abrichtdraht 78, der als Elektrode dient. Der Abrichtdraht 78, wird in einem Drahtvorrat der Drahtzuführung 74 bereitgestellt, beispielsweise in einer Drahtspule. Ein mit 102 bezeichneter Pfeil veranschaulicht eine Bewegung des Abrichtdrahts 78 weg vom Drahtvorrat und entlang der Schleifscheibe 44. Der Abrichtdraht 78 wird entlang der Drahtführung 76 geführt, die benachbart zur Schleifscheibe 44 gegebenenfalls eine Aussparung aufweist, sodass dort der Abrichtdraht 78 frei entlang der Schleifscheibe 44 bewegt werden kann. Die Bewegung des Abrichtdrahts 78 entlang der Schleifscheibe 44 erfolgt unter Beibehaltung eines kleinen Spalts in einem Wirkbereich 110. Es gibt also üblicherweise keinen direkten Kontakt zwischen dem Abrichtdraht 78 an der Schleifscheibe 44.

In Fig. 3 sind ferner Düsen der Zuführung 90 für das dielektrische Spülmedium schematisch dargestellt. Das Abrichten mittels Drahterodieren erfordert die Bereitstellung eines Dielektrikums im Wirkbereich 110, beispielsweise durch Bereitstellung des dielektrischen Spülmediums 92 über die Zuführung 90. Während des Abrichtens wird die Schleifscheibe 44 rotatorisch angetrieben, vergleiche einen mit 104 bezeichneten Pfeil in Fig. 2. Über die Stromzuführung 80 mit den Strompfaden 84, 86 werden Pulse (Strompulse) zwischen der Schleifscheibe 44 und dem Abrichtdraht 78 erzeugt. Durch eine resultierende Funkenentladung zwischen der Schleifscheibe 44 und dem Abrichtdraht 78 wird Material von der Oberfläche 108 der Schleifscheibe 44 abgetragen. Dies betrifft üblicherweise einen leitfähigen Binder, in den Schleifpartikel eingebettet sind. Mit anderen Worten werden also die Schleifpartikel üblicherweise nicht direkt abgetragen. Die Schleifpartikel können von der Oberfläche 108 der Schleifscheibe 44 gelöst werden, wenn umgebendes Material abgetragen ist.

Im Ausführungsbeispiel gemäß Fig. 3 wird der verbrauchte Abrichtdraht 78 einer Drahtentsorgung 118 zugeführt, die beispielsweise einen Drahtschneider 116 zum Zerkleinern des verbrauchten Abrichtdrahts 78 aufweist.

Zur (mittelbaren) Kontaktierung der an der Schleifscheibenaufnahme 50 sitzenden Schleifscheibe 44 entlang des Strompfades 86 dient eine im Ausführungsbeispiel als Stromübertragungseinheit 100 bezeichnete Anordnung, die anhand eines in den Figuren 4 und 5 veranschaulichten Ausführungsbeispiels erläutert wird.

Die Figuren 4 und 5 beziehen sich jeweils auf das von der Schleifscheibenaufnahme 50 abgewandte Ende 98 der Schleifspindel 40 bzw. von deren Spindelwelle 96. Die Spindelwelle 96 sitzt in einem lediglich schematisch angedeuteten Spindelgehäuse 122. Die Spindelwelle 96 ist durch den Drehantrieb 52 rotatorisch um die Spindelachse 54 antreibbar. Zur Lagerung dient eine Spindellagerung 124 mit zumindest zwei Wälzlagern 126, die entlang der Spindelachse 54 axial voneinander beabstandet sind. Im Ausführungsbeispiel weisen die Wälzlager 126 Wälzkörper 128 aus keramischen Werkstoffen auf. Die Wälzkörper 128 sind in Fig. 4 lediglich symbolhaft angedeutet. Bei den Wälzkörpern 128 kann es sich um Kugeln, Rollen und dergleichen handeln. Durch Verwendung keramischer Wälzkörper können Innenteil und Außenteil der Lager 126 elektrisch voneinander isoliert werden, zumindest in beispielhaften Ausgestaltungen. Diese Gestaltung vereinfacht die Stromübertragung in die Spindelwelle 96 und schlussendlich die Kontaktierung der Schleifscheibe 44.

Im Ausführungsbeispiel trägt die Spindelwelle 96 an ihrem Ende 98 ein Kontaktstück 130, an dem eine Stirn 132 ausgebildet ist. Beispielhaft ist das Kontaktstück 130 als Stopfen gestaltet. Das Kontaktstück 130 bildet eine Scheibe aus, die die Stirn 132 bereitstellt.

Die Stirn 132 wird durch einen Kontaktfinger 140 kontaktiert, der ebenso Bestandteil des Strompfades 86 ist. Der Kontaktfinger 140 ist beispielsweise als Kontaktstift gestaltet. Der Kontaktfinger 140 sitzt an/in einem Kontaktträger 142. Der Kontaktfinger 140 kontaktiert die Stirn 132 in einem zentrisch gebildeten Kontaktbereich 146. Der Kontaktfinger 140 weist eine Endfläche 148 auf, die der Stirn 132 zugewandt ist. Im Ausführungsbeispiel ist die Endfläche 148 eine ballig geformte Endfläche. Mit anderen Worten ist die Endfläche 148 konvex gestaltet. Auf diese Weise gibt es nur eine vergleichsweise kleine kreisförmige Kontaktfläche zwischen dem Kontaktfinger 140 und der Stirn 132.

Der Kontaktfinger 140 ist koaxial zur Spindelachse 54 und folglich koaxial zur Stirn 132 orientiert. Auf diese Weise bildet sich der Kontaktbereich 146 genau im Zentrum aus, die Spindelachse 54 schneidet den Kontaktbereich 146. Diese Gestaltung hat den Vorteil, dass auch bei einer schnell drehenden Spindelwelle 96 mit hoher Drehzahl nur eine vergleichsweise geringe Relativgeschwindigkeit zwischen der Stirn 132 und dem Kontaktfinger 140 im Kontaktbereich 146 gegeben ist.

Der Kontaktfinger 140 sitzt mittelbar oder unmittelbar auf einem Halter 150. Der Halter 150 ist im Ausführungsbeispiel mit dem Spindelgehäuse 122 gekoppelt. Wenn die Spindelwelle 96 und damit auch die Stirn 132 rotiert wird, erfolgt keine Rotation des Halters 150 und daher auch keine Rotation des Kontaktfingers 140.

Der Halter 150 trägt im Ausführungsbeispiel gemäß den Figuren 4 und 5 eine Andrückeinheit 154, die auf den Kontaktfinger 140 einwirkt. Mit der Andrückeinheit 154 kann der Kontakt zwischen dem Kontaktfinger 140 und der Stirn 132 gezielt hergestellt oder unterbrochen werden. Die Andrückeinheit 154 kann den Kontaktfinger 140 axial bewegen, um die Anlage im Kontaktbereich 146 herbeizuführen oder aufzuheben.

Die Andrückeinheit 154 weist im Ausführungsbeispiel einen Zylinder 156 auf, der beispielsweise als Pneumatik-Zylinder gestaltet ist. Der Zylinder 156 umfasst eine ausfahrbare Stange 160, die mit dem Kontaktträger 142 gekoppelt ist. Der Zylinder 156 kann über Leitungen 162, 164 gesteuert werden, um die Stange 160 axial entlang der Spindelachse 54 zu verfahren. Auf diese Weise können der Kontaktträger 142 und mittelbar der daran/darin aufgenommene Kontaktfinger 140 bewegt werden. Mit der Andrückeinheit 154 kann eine Andrückkraft 168 (vergleiche den Blockpfeil in Fig. 5) erzeugt werden, die den Kontaktfinger 140 gegen die Stirn 132 drückt.

In beispielhaften Ausgestaltungen ist der Kontaktfinger 140 auswechselbar am Kontaktträger 142 aufgenommen. In beispielhaften Ausgestaltungen ist das Kontaktstück 130 auswechselbar an der Spindelwelle 96 aufgenommen. Es bietet sich an, den Kontaktfinger 140 als Verschleißteil zu gestalten. Mit anderen Worten kann die Paarung aus Stirn 132 und Kontaktfinger 140 (mit der Endfläche 148) so ausgelegt werden, dass eher der Kontaktfinger 140 als die Stirn 132 verschleißt.

In beispielhaften Ausgestaltungen ist eine Verschleißüberwachung 170 zu Überwachung des Verschleißzustands des Kontaktfingers 140 vorgesehen. Beispielhaft überwacht die Verschleißüberwachung 170 eine axiale Position des Kontaktfingers 140. Auf diese Weise kann auch ein aktueller Betriebszustand des Kontaktfingers 140 (Kontakt hergestellt oder nicht) erfasst werden, wenn Bewegungen des Kontaktfingers 140 überwacht werden. Im Ausführungsbeispiel umfasst die Verschleißüberwachung 170 einen Sensor 174, der auf einen am Kontaktträger 142 gebildeten Indikator 172 ausgerichtet ist. Bei dem Indikator 172 handelt es sich beispielsweise um einen Vorsprung oder dergleichen. Der Sensor 174 ist beispielsweise als kapazitiver oder induktiver Sensor gestaltet. Ein solcher Sensor 174 ist robust und für die Verwendung bei einer Schleifmaschine 10 geeignet.

In beispielhaften Ausgestaltungen wird der Kontaktbereich 146 zumindest zeitweise mit Kühlmittel versorgt, um eine übermäßige Erwärmung zu vermeiden. Zu diesem Zweck dient eine Kühlmittelversorgung 180 mit zumindest eine Austrittsdüse 182, die auf den Kontaktbereich 146 gerichtet ist. Die Kühlmittelversorgung 180 kann Bestandteil der übergeordneten Kühlmittelversorgung der Schleifmaschine 10 sein. Mit anderen Worten muss keine separate Kühlmittelversorgung bereitgestellt werden. Das ohnehin bei der Schleifmaschine 10 genutzte Kühlmittel/Kühlschmiermittel kann auch zur Kühlung des Kontaktbereichs 146 für die Stromübertragung genutzt werden.

Der Kontaktbereich 146 zwischen dem Kontaktfinger 140 und der Stirn 132 der Spindelwelle 96 muss nicht notwendigerweise hermetisch gekapselt sein. Ähnlich wie bei anderen Komponenten der Schleifmaschine 10 kann über die Kühlmittelversorgung 180 durch Spülen ein übermäßiger Eintrag von Verschmutzungen, Abrieb und dergleichen verhindert werden.

Im Rahmen der Offenbarung wird somit eine Stromübertragungseinheit 100 zur Kontaktierung der schnelldrehenden Spindelwelle 96 und zur mittelbaren Kontaktierung der Schleifscheibe 44 beschrieben, die einen koaxial zur Spindelachse 54 angeordneten Kontaktfinger 140 nutzt, der mit seiner Endfläche 148 in einem vergleichsweise kleinen und zentral ausgebildeten Kontaktbereich 146 eine Stirn 132 bei einem von der Schleifscheibe 44 abgewandten Ende 98 der Spindelwelle 96 kontaktiert.

Die Stromübertragungseinheit 100 ist ein Bestandteil des Strompfades 86 der Stromzuführung 80 der drahtbasierten Abrichtvorrichtung 70. Die Stromübertragungseinheit 100 dient zur Herstellung, Aufrechterhaltung und Steuerung des Kontakts mit der Schleifscheibe 44.

## Patentansprüche

1. Vorrichtung (70) zum elektroerosiven Abrichten von Schleifscheiben (44, 46), insbesondere Schleifscheibenabrichtvorrichtung (70), die Folgendes aufweist:
- eine Schleifspindel (40, 42) mit einer um eine Spindelachse (54) rotierbaren Schleifscheibenaufnahme (50) zur Aufnahme einer elektroerosiv abrichtbaren Schleifscheibe (44, 46),
- einen als Drahtelektrode entlang einer Drahtführung (76) geführten Abrichtdraht (78), und
- eine Stromzuführung (80) zur Einleitung hochfrequenter Spannungsimpulse in den Abrichtdraht (78) und die Schleifscheibe (44, 46),
wobei die Stromzuführung (80) einen Strompfad (86) in die Schleifspindel (40, 42) zur elektrischen Kontaktierung der Schleifscheibe (44, 46) umfasst, und
wobei der Strompfad (86) einen koaxial zur Schleifspindel (40, 42) orientierten Kontaktfinger (140) umfasst, der zur Kontaktierung der Schleifscheibe (44, 46) eine Stirn (132) der Schleifspindel (40, 42) in einem zentralen Kontaktbereich (146) kontaktiert, den die Spindelachse (54) schneidet.

2. Vorrichtung (70) nach Anspruch 1, wobei der Kontaktfinger (140) austauschbar an einem Kontaktträger (142) aufgenommen ist.

3. Vorrichtung (70) nach Anspruch 1 oder 2, wobei der Kontaktfinger (140) drehfest und axial verschieblich gelagert ist, und wobei die Schleifspindel (40, 42) eine durch einen Drehantrieb (52) rotierbare Spindelwelle (96) aufweist.

4. Vorrichtung (70) nach einem der Ansprüche 1-3, ferner aufweisend eine Andrückeinheit (154), die dazu ausgebildet ist, den Kontaktfinger (140) definiert gegen die Stirn (132) der Schleifspindel (40, 42) zu drücken, und wobei die Andrückeinheit (154) insbesondere einen pneumatischen Zylinder (156) umfasst, der auf den Kontaktfinger (140) einwirkt.

5. Vorrichtung (70) nach einem der Ansprüche 1-4, wobei die Schleifspindel (40, 42) ein Kontaktstück (130) aufweist, das gemeinsam mit der Spindelwelle (96) rotiert und die Stirn (132) ausbildet.

6. Vorrichtung (70) nach einem der Ansprüche 1-5, ferner aufweisend eine Verschleißüberwachung (170) für den Kontaktfinger (140), die insbesondere eine axiale Position des Kontaktfingers (140) überwacht, wobei die Verschleißüberwachung (170) insbesondere einen kapazitiven oder induktiven Sensor (174) umfasst.

7. Vorrichtung (70) nach einem der Ansprüche 1-6, ferner aufweisend eine Kühlmittelversorgung (180), insbesondere eine Kühlschmiermittelversorgung, wobei die Kühlmittelversorgung (180) zumindest eine Austrittsdüse (182) für Kühlmittel oder Kühlschmiermittel aufweist, die auf den Kontaktbereich (146) gerichtet ist.

8. Vorrichtung (70) nach einem der Ansprüche 1-7, wobei der Kontaktfinger (140) eine ballig geformte Endfläche (148) aufweist, die der Stirn (132) der Schleifspindel (40, 42) zugewandt ist.

9. Vorrichtung (70) nach einem der Ansprüche 1-8, wobei die Stirn (132) an einem von der Schleifscheibenaufnahme (50) der Schleifspindel (40, 42) fernliegenden Ende (98) der Schleifspindel (40, 42) angeordnet ist.

10. Vorrichtung (70) nach einem der Ansprüche 1-9, wobei die Schleifspindel (40, 42) eine Spindellagerung (124) umfasst, die keramische Wälzkörper (128) nutzt.

11. Vorrichtung (70) nach einem der Ansprüche 1-10, wobei die Materialpaarung im Kontaktbereich (146) zwischen der Stirn (132) und dem Kontaktfinger (140) so gewählt ist, dass der Kontaktfinger (140) schneller verschleißt als die Stirn (132) der Schleifspindel (40, 42), und insbesondere wobei zumindest die Stirn (132) der Schleifspindel (40, 42) oder der Kontaktfinger (140) mit einer verschleißmindernden Beschichtung versehen ist.

12. Vorrichtung (70) nach einem der Ansprüche 1-11, wobei der Abrichtdraht (78) als Anode und die Schleifscheibe (44, 46) als Kathode für das elektroerosive Abrichten dient.

13. Vorrichtung (70) nach einem der Ansprüche 1-12, ferner aufweist einen Generator (80) der dazu ausgebildet ist, Spannungsimpulse hoher Stromstärke im Bereich von 100-500 A und hoher Frequenz im Bereich von 20-60 kHz für das Abrichten zu erzeugen.

14. Vorrichtung (70) nach einem der Ansprüche 1-13, wobei die Schleifspindel (40, 42) eine Innenschleifspindel und die Schleifscheibe (44, 46) eine Innenschleifscheibe (44) ist, und/oder
wobei die Schleifspindel (40, 42) einen Drehantrieb (52) aufweist oder mit einem Drehantrieb (52) gekoppelt ist, der dazu ausgestaltet ist, die Spindelwelle (96) in einem Drehzahlbereich von 20.000-90.000 min⁻¹ anzutreiben.

15. Schleifmaschine (10), insbesondere Rundschleifmaschine, mit einer Vorrichtung (70) nach einem der Ansprüche 1-14 zum elektroerosiven Abrichten von Schleifscheiben (44, 46) in der Schleifmaschine (10), insbesondere zum elektroerosiven Abrichten von Innenschleifscheiben (44).
